# EUROPÄISCHE PATENTSCHRIFT

(11) **EP 1 064 163 B1**
(45) Veröffentlichungstag und Bekanntmachung des Hinweises auf die Patenterteilung: **15.08.2007**
(21) Anmeldenummer: 00901115.6
(22) Anmeldetag: 19.01.2000
(51) Int. Cl.: B60J 7/22

(54) **WINDSTOPEINRICHTUNG**
WIND-STOPPING DEVICE
DISPOSITIF DEFLECTEUR

(30) Priorität: 21.01.1999 DE 19902242
(43) Veröffentlichungstag der Anmeldung: 03.01.2001
(73) Patentinhaber: SCAMBIA INDUSTRIAL DEVELOPMENTS AKTIENGESELLSCHAFT, 9494 Schaan (LI)
(72) Erfinder: RIEHLE, Jörg, D-70439 Stuttgart (DE); RIEHLE, Hans, D-71638 Ludwigsburg (DE); BORNEMISSZA, Istvan, D-71696 Möglingen (DE)
(74) Vertreter: Beck, Jürgen
(86) Internationale Anmeldenummer: PCT/EP2000/000388
(87) Internationale Veröffentlichungsnummer: WO 2000/043228

(56) Entgegenhaltungen:
- EP-A- 0 718 135
- EP-A- 0 887 217
- EP-A- 0 965 470
- DE-A- 3 935 630
- DE-A- 4 338 102
- DE-A- 4 405 707
- DE-A- 19 705 682
- DE-C- 4 335 103

## Beschreibung

Die Erfindung betrifft eine Windstopeinrichtung für Kraftfahrzeuge, umfassend ein Windstopelement, eine in einen Aufnahmeraum einer Kraftfahrzeugkarosserie eingreifend montierbare Halterung für das Windstopelement, an welcher dieses derart gelagert ist, dass es von einer aktiven, über eine Gürtellinie der Kraftfahrzeugkarosserie überstehenden Stellung in eine im Wesentlichen innerhalb einer Außenkontur der Kraftfahrzeugkarosserie liegende inaktive Stellung bringbar ist und umgekehrt, eine mit einem elektrischen Antrieb versehenen Hebevorrichtung, mit welcher das Windstopelement in einer Hubrichtung zwischen der inaktiven Stellung und der aktiven Stellung verfahrbar ist.

Derartige Windstopeinrichtungen sind aus der gattungsgemäßen EP 0 718 135 A1 bekannt. Bei diesen besteht das Problem, dass beim Überführen derselben von der inaktiven Stellung in die aktive Stellung die Stabilität problematisch ist.

Der Erfindung liegt daher die Aufgabe zugrunde, eine Windstopeinrichtung der gattungsgemäßen Art derart zu verbessern, dass das Windstopelement in der aktiven Stellung stabil positionierbar ist.

Diese Aufgabe wird bei einer Windstopeinrichtung der eingangs beschriebenen Art erfindungsgemäß dadurch gelöst, dass die Hebevorrichtung eine sich in der Hubrichtung erstreckende und mit einem unteren Bereich des Windstopelements gekoppelte und den unteren Bereich des Windstopelements führende Bahnführung für das Windstopelement aufweist, und dass das Windstopelement in der aktiven Stellung mit einer nahe einer für dieses in der Karosserie vorgesehenen Austrittsöffnung angeordneten Austrittsführung zusätzlich zu der Führung des unteren Bereichs durch die Bahnführung geführt ist.

Der Vorteil der erfindungsgemäßen Lösung ist darin zu sehen, daß damit eine komfortable Bewegung der Windstopeinrichtung zwischen der aktiven Stellung und der inaktiven Stellung bei stabiler Position in der aktiven Stellung realisierbar ist, wobei insbesondere eine Hebevorrichtung eine einfache kinematische Möglichkeit bietet, das Windstopelement mit einem elektrischen Antrieb zwischen der inaktiven Stellung und der aktiven Stellung zu bewegen.

Um erfindungsgemäß einen leichten Lauf und gleichzeitig jedoch eine präzise Führung des Windstopelements bei der Bewegung zwischen der inaktiven Stellung und der aktiven Stellung zu erhalten, ist vorgesehen, dass jede der Hebeeinheiten eine sich in Hubrichtung erstreckende Bahnführung für das Windstopelement aufweist.

Eine derartige Bahnführung ist insbesondere mit einem unteren Bereich des Windstopelements gekoppelt und führt diesen, vorzugsweise zusätzlich zu der Führung des Windstopelements durch die Austrittsführung.

Ferner sieht eine ausreichend stabile Anordnung des Windstopelements vor, daß das Windstopelement mit einer nahe einer für dieses in der Karosserie vorgesehenen Austrittsöffnung angeordneten Austrittsführung geführt ist. Eine derartige nahe der Austrittsöffnung liegende Austrittsführung für das Windstopelement ist von Vorteil, um dieses in seiner aktiven Stellung stabil und sicher zu positionieren

Die Hebevorrichtung kann prinzipiell beliebig ausgebildet sein. Beispielsweise wäre es denkbar, als Hebevorrichtung eine Art "Nürnberger Schere" vorzusehen, mit welcher sich ein Anheben des Windstopelements und ein Absenken des Windstopelements realisieren läßt.

Eine besonders günstige Lösung sieht jedoch vor, daß die Hebevorrichtung zwei in einer Querrichtung im Abstand voneinander angeordnete Hebeeinheiten aufweist. Eine derartige Anordnung der Hebeeinheiten hat den Vorteil, daß mit diesen eine stabile kippfreie Positionierung des Windstopelements in den jeweiligen Stellungen möglich ist und insbesondere auch in den Zwischenstellungen zwischen der inaktiven Stellung und der aktiven Stellung eine präzise Führung des Windstopelements erfolgen kann, die Voraussetzung ist, um eine störungsunanfällige Bewegbarkeit des Windstopelements realisieren zu können.

Um die beiden Hebeeinheiten günstig anordnen zu können, ist vorzugsweise vorgesehen, daß die Halterung zwei in der Querrichtung im Abstand voneinander angeordnete und sich in einer Hubrichtung erstreckenden Träger aufweist, an denen die Hebeeinheiten angeordnet sind. Eine derartige Ausführung der Halterung schafft insbesondere die Möglichkeit einer einfachen Montage, da die gesamte Halterung für die Windstopeinrichtung auch gleichzeitig über die Träger eine Halterung für die Hebeeinheiten darstellt.

Die Austrittsführung kann auch dazu eingesetzt werden, das Windstopelement in seiner inaktiven Stellung noch definiert geführt zu halten, um durch eine mechanisch präzise Führung über den Benutzungszeitraum einwandfreies Funktionieren der Windstopeinrichtung zu gewährleisten.

Besonders günstig ist es, wenn die Austrittsführung an der Halterung angeordnet ist, da damit einerseits bei der Herstellung der Windstopeinrichtung und der Montage derselben bereits die Lage der Austrittsführung ebenfalls definiert relativ zur Halterung vorgebbar ist und somit insbesondere dann, wenn auch die Hebeeinheiten an der Halterung angeordnet sind, eine Vorfertigung der Windstopeinrichtung zur Montage möglich ist, bei welcher die gesamte Relativpositionierung von Hebeeinheiten, Austrittsführung und Windstopelement bereits vor der Montage der Windstopeinrichtung in der Kraftfahrzeugkarosserie mit der notwendigen Präzision festlegbar ist, um bei der Montage oder nach der Montage jeglichen Aufwand hinsichtlich einer genauen Positionierung oder Justierung der einzelnen Komponenten relativ zueinander zu vermeiden.

Hinsichtlich der Funktion der Hebeeinheiten selbst wurden im Zusammenhang mit der bisherigen Erläuterung der einzelnen Ausführungsbeispiele keine näheren Angaben gemacht. So sieht eine vorteilhafte Ausführungsform der erfindungsgemäßen Lösung vor, daß die Hebeeinheiten derart miteinander gekoppelt sind, daß alle durch diese erreichbaren Stellungen des Windstopelements parallel zueinander ausgerichtet sind. Eine derartige Kopplung der Hebeeinheiten schafft die Möglichkeit, das Windstopelement beim Bewegen zwischen der aktiven und der inaktiven Stellung stets zwischen parallel zueinander ausgerichteten Stellungen zu bewegen und somit eine optimale mechanische Führung des Windstopelements an der Halterung zu gewährleisten. Darüber hinaus ist eine derartige Führung insoweit von Vorteil, als sie einen einwandfreien ruckfreien Lauf des Windstopelements und andererseits auch damit eine hohe Lebensdauer der Hebevorrichtung gewährleistet.

Prinzipiell wäre es denkbar, die beiden Hebeeinheiten über eine Steuerung, beispielsweise elektronisch, derart miteinander zu koppeln, daß sie in der geforderten Art und Weise das Windstopelement in zueinander parallele Stellungen bewegen.

Besonders einfach und kostengünstig ist es jedoch, wenn die beiden Hebeeinheiten mechanisch miteinander synchronisiert bewegbar sind. Eine derartige mechanische Synchronisierung kann beispielsweise über Hebelverbindungen oder Zugelemente erzwungen werden.

Besonders einfach läßt sich diese jedoch dann erreichen, wenn die Hebeeinheiten durch ein Verbindungsgetriebe miteinander gekoppelt sind.

Ein derartiges Verbindungsgetriebe, welches sich insbesondere in Querrichtung zwischen den Hebeeinheiten erstreckt, kann in unterschiedlichster Art und Weise angeordnet sein. Beispielsweise wäre es denkbar, hierzu separate Elemente an der Halterung vorzusehen. Eine besonders günstige Lösung sieht vor, daß das Verbindungsgetriebe im Bereich eines Querträgers der Halterung angeordnet ist.

Der Querträger kann dabei an der Halterung an beliebigen Stellen angeordnet sein. Besonders günstig ist es jedoch, wenn das Verbindungsgetriebe im Bereich eines oberen Querträgers der Halterung angeordnet ist, welcher vorzugsweise nahe der Austrittsöffnung für das Windstopelement an der Karosserie vorgesehen ist und im günstigsten Fall auch die Austrittsführung trägt.

Die Hebeeinheiten können bei der Erfindung selbst angetrieben sein. Beispielsweise wäre es selbst bei mechanisch erzwungener Synchronisation möglich, die Hebeeinheiten jeweils durch einen Antriebsmotor anzutreiben. Dies hätte beispielsweise den Vorteil, daß die Hebeeinheiten als identische Einheiten aufgebaut werden könnten und jeweils die Synchronisation über mechanische Verbindungen erfolgt, die beispielsweise bei Elektroantrieben eine synchrone Bewegung erzwingen.

Besonders vorteilhaft ist es jedoch, insbesondere um eine kostengünstige Lösung zu erhalten, wenn beide Hebeeinheiten durch einen einzigen elektrischen Antrieb antreibbar sind.

Hinsichtlich der Ausbildung der Hebeeinheiten sind die unterschiedlichsten Lösungen denkbar. Beispielsweise wäre es denkbar, die Hebeeinheiten in Form von Teleskopzylindern auszuführen. Diese sind jedoch hinsichtlich des Raumbedarfs aufwendig. Aus diesem Grund sieht eine besonders günstige Lösung vor, daß jede der Hebeeinheiten ein Hubgetriebe aufweist, welches auf das Windstopelement wirkt.

Ein derartiges Hubgetriebe könnte beispielsweise durch ein endloses umlaufend gelagertes Trumm ausgebildet sein, welches über einen Angriffspunkt mit dem Windstopelement gekoppelt ist.

Eine besonders günstige Lösung sieht jedoch vor, daß jedes Hubgetriebe eine Hubspindel mit einer Spindelmutter aufweist. Eine derartige Ausbildung des Hubgetriebes hat den großen Vorteil, daß mit einer Hubspindel und einer von dieser bewegten Spindelmutter große Kräfte einfach erzeugbar sind und außerdem eine präzise Führung der Spindelmutter gewährleistet ist.

Um mit einer großen Gewindesteigung arbeiten zu können, ist es vorteilhaft, wenn ein mehrgängiges Gewinde zum Einsatz kommt.

Insbesondere sind auch Hubspindeln mechanisch einfach miteinander koppelbar, um eine synchrone Bewegung der beiden Hubeinheiten relativ zueinander zu erhalten.

Prinzipiell wäre es denkbar, über das Hubgetriebe insbesondere die Hubspindel bereits eine Führung des Windstopelements in der Hubrichtung zu erreichen.

Hinsichtlich der Anordnung der Bahnführung relativ zu dem Hubgetriebe sind die unterschiedlichsten Möglichkeiten denkbar. Eine einfache Möglichkeit sieht vor, daß die Bahnführung neben dem Hubgetriebe verläuft und somit einerseits der Antrieb und gleichzeitig die Führung des Windstopelements im Bereich jeder Hebeeinheit nahe beieinander liegen.

Insbesondere ist es vorteilhaft, wenn die Bahnführung an den Trägern für die Hebeeinheiten angeordnet sind, so daß sich zwei an der Halterung vorgesehene Baugruppen bilden lassen, von denen jede einerseits für den Antrieb andererseits für die exakte Führung des Windstopelements eingesetzt werden kann.

Um gleichzeitig bei Verwenden einer Bahnführung eine geometrische Überbestimmung des Hubgetriebes zu vermeiden und somit die Funktion des Hubgetriebes gegebenenfalls aufgrund dieser geometrischen Überbestimmung durch "Klemmen" zu beeinträchtigen, ist vorzugsweise vorgesehen, daß das Windstopelement mit jedem der Hubgetriebe über ein ein Kippen quer zur Hubrichtung zulassendes Hublager gekoppelt ist.

Insbesondere ist ein derartiges Hublager dann von Vorteil, wenn das Windstopelement sich aufgrund seiner Form nicht ausschließlich in einer Ebene bewegen kann, sondern beispielsweise aufgrund einer Krümmung desselben, zusätzliche Bewegungen quer zu der Ebene ausführen können muß. Beispielsweise läßt sich dies durch ein derartiges Hublager realisieren.

Darüber hinaus ist entweder die Bahnführung an die von dem Windstopelement auszuführende Bewegung angepaßt oder es ist aber auch eine Bewegbarkeit der Kopplung zwischen der Bahnführung und der Bewegung des Windstopelements vorgesehen. Beispielsweise kann auch das Verbindungselement zwischen Bahnführung und Windstopelement so ausgebildet sein, daß es eine Relativbewegung dergestalt zuläßt, daß die Bahnführung eine geradlinige Führung darstellt, während das Hubelement zusätzliche Bewegungen quer zu der durch die Bahnführung vorgesehenen Ebene ausführt.

Um die erfindungsgemäße Windstopeinrichtung möglichst raumsparend ausbilden zu können und insbesondere den Aufnahmeraum im Kraftfahrzeug möglichst klein halten zu können, ist vorzugsweise vorgesehen, daß sich die Hebevorrichtung im wesentlichen über einen Bereich erstreckt, über den sich das in seiner inaktiven Stellung stehende Windstopelement erstreckt. Das heißt, daß der Raumbedarf der Hebevorrichtung nicht wesentlich den Raumbedarf des in der inaktiven Stellung stehenden Windstopelements übersteigt, wobei sich dennoch die Hebevorrichtung geringfügig über das Windstopelement in der inaktiven Stellung hinauserstrecken kann.

Besonders zweckmäßig ist es, wenn sich die Hebeeinheiten der Hebevorrichtung im wesentlichen über den Bereich erstrecken, über den sich das in der inaktiven Stellung stehende Windstopelement erstreckt, so daß insbesondere der Raumbedarf für die Hebeeinheiten nicht nennenswert größer ist als der Raumbedarf für das in der inaktiven Stellung stehende Windstopelement. Dies schließt jedoch nicht aus, daß sich die Hebeeinheiten teilweise mit Endabschnitten über das Windstopelement in seiner inaktiven Stellung hinauserstrecken, da dies aufgrund geometrischer Gegebenheiten zwingend erforderlich ist, wenn das Windstopelement durch die Hebeeinheiten einerseits in seiner inaktiven Stellung andererseits in seiner aktiven Stellung sicher geführt werden soll.

Um ferner die Hubgetriebe günstig anzuordnen, ist vorzugsweise vorgesehen, daß die Hubgetriebe sich in einer zum Windstopelement in seiner inaktiven Stellung ungefähr parallel erstreckenden Ebene liegen.

Besonders günstig läßt sich der Raumbedarf in der Querrichtung dann gestalten, wenn die Hubgetriebe in der Querrichtung zwischen maximal außen liegenden Seitenkanten des Windstopelements in seiner inaktiven Stellung liegen, da damit die Hubgetriebe keinerlei Verbreiterung der Windstopeinrichtung in Querrichtung bedingen und somit sich das Windstopelement selbst in Querrichtung über eine maximal mögliche Breite relativ zur Kraftfahrzeugkarosserie erstrecken kann.

Auch bei der Anordnung der Bahnführungen ist es günstig, wenn diese sich in einer zum Windstopelement in seiner inaktiven Stellung ungefähr parallel erstreckenden Ebene verlaufen, so daß auch die Bahnführungen keinen zusätzlichen Raumbedarf in der Querrichtung erfordern.

Hinsichtlich der Ausbildung des Windstopelements selbst wurden bislang keine näheren Angaben gemacht. So sieht eine Möglichkeit vor, daß das Windstopelement aus einem plattenähnlich geformten formsteifen Material ausgebildet ist. Ein derartiges plattenähnlich geformtes formsteifes Material könnte beispielsweise ein Blech sein, welches mit Durchbrüchen versehen ist. Es ist aber auch denkbar, das Windstopelement aus einer Platte aus lichtdurchlässigem Material, beispielsweise Glas oder transparentem Kunststoff, zu bilden, welche mit Durchbrüchen versehen sein kann oder nicht.

Eine andere vorteilhafte Möglichkeit sieht vor, daß das Windstopelement einen formsteifen Rahmen mit einem Einsatz, beispielsweise einer Bespannung, umfaßt, wobei der Einsatz durchsichtig ausgebildet ist. Dies kann entweder durch ein lichtdurchlässiges Material oder durch ein mit Durchbrüchen versehenes Flachmaterial, beispielsweise netzähnliches Material erfolgen. Dieses Material kann beispielsweise auch noch luftdurchlässig sein.

Darüber hinaus wäre es denkbar, insbesondere um Raum in der Kraftfahrzeugkarosserie zu sparen, das Windstopelement selbst beim Bewegen zwischen der aktiven Stellung und der inaktiven Stellung zu deformieren. Beispielsweise das Windstopelement beim Bewegen von der inaktiven Stellung in die aktive Stellung noch zusätzlich zu entfalten oder zumindest dessen Form zu vergrößern.

Besonders günstig ist es dabei, wenn das Windstopelement forminvariant zwischen der aktiven Stellung und der inaktiven Stellung bewegbar ist, da dies einerseits einen einfachen Aufbau des Windstopelements zuläßt und andererseits eine einfache mit einem Antrieb versehene Lösung darstellt, die insbesondere hinsichtlich der mechanischen Funktion äußerst zuverlässig arbeitet.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines Kraftfahrzeugs mit einer erfindungsgemäßen Windstopeinrichtung;
- Fig. 2: einen vertikalen Schnitt durch ein erstes Ausführungsbeispiel einer erfindungsgemäßen Windstopeinrichtung längs Linie 2-2 in Fig. 4;
- Fig. 3: eine Frontansicht des ersten Ausführungsbeispiels der erfindungsgemäßen Windstopeinrichtung;
- Fig. 4: eine Rückansicht des ersten Ausführungsbeispiels der erfindungsgemäßen Windstopeinrichtung;
- Fig. 5: eine vergrößerte Darstellung des ersten Ausführungsbeispiels gemäß Fig. 4 im Bereich der in Fig. 2 dargestellten Hebeeinheit mit Antrieb;

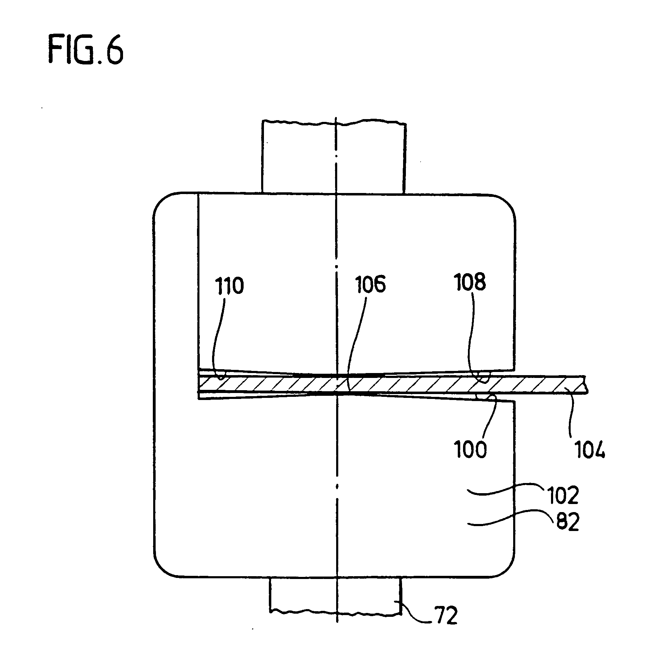

- Fig. 6: eine vergrößerte Darstellung eines Schnitts längs Linie 6-6 in Fig. 5 und
- Fig. 7: eine Ansicht ähnlich Fig. 4 eines zweiten Ausführungsbeispiels einer erfindungsgemäßen Windstopeinrichtung.

Bei einem als Ganzes mit 10 bezeichneten Kraftfahrzeug mit einer Karosserie 12 ist ein als Ganzes mit 14 bezeichnetes erstes Ausführungsbeispiel einer Windstopeinrichtung beispielsweise hinter einer vorderen Sitzreihe 16 angeordnet, welche den Fahrersitz umfaßt. Die Windstopeinrichtung 14 umfaßt dabei ein Windstopelement 20, welches dann, wenn es in seiner aktiven Stellung steht, eine Gürtellinie 22 der Karosserie 12 überragt und hinter der vorderen Sitzreihe 16 dazu führt, daß ein sich hinter dem Kraftfahrzeug 10 bildender Wirbel 24 einer eine Oberseite 26 der Karosserie 12 überströmenden Luftströmung 28 auf einer der Sitzreihe 16 abgewandten hinteren Seite der Karosserie 12 verbleibt und sich nicht in einen Raum 30 hineinerstreckt, in welchem sich Schulter, Hals und Kopf der auf der Sitzreihe 16 sitzenden Fahrgäste befinden.

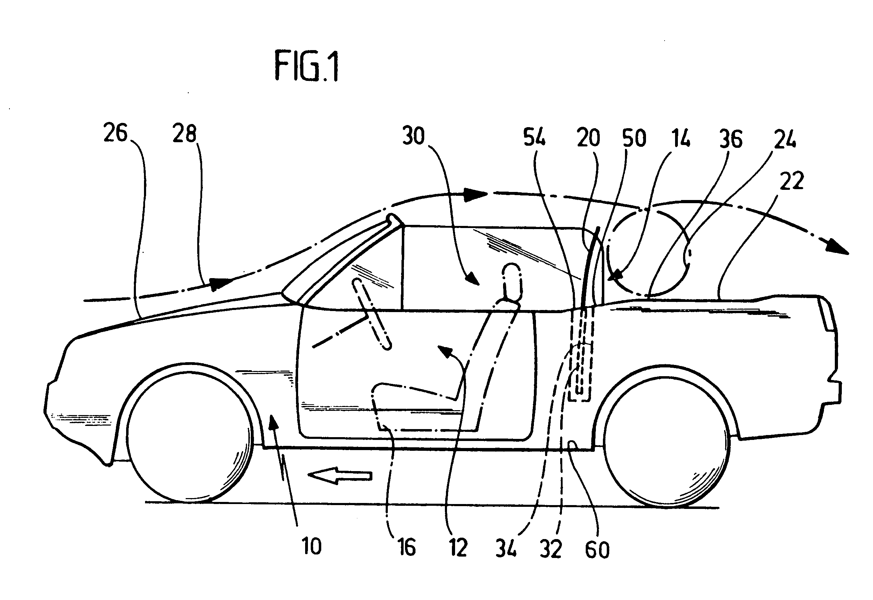

Die Windstopeinrichtung 14 umfaßt dabei ferner eine Halterung 32, welche in einem für diese vorgesehenen Aufnahmeraum 34 in der Karosserie 12 angeordnet ist und so ausgebildet ist, daß das Windstopelement von seiner in Fig. 1 dargestellten und über die Gürtellinie 22 nach oben überstehenden aktiven Stellung in eine inaktive Stellung im Aufnahmeraum 34 bewegbar ist, in welcher das Windstopelement 20 vollständig innerhalb einer Außenkontur der Karosserie 12 angeordnet ist.

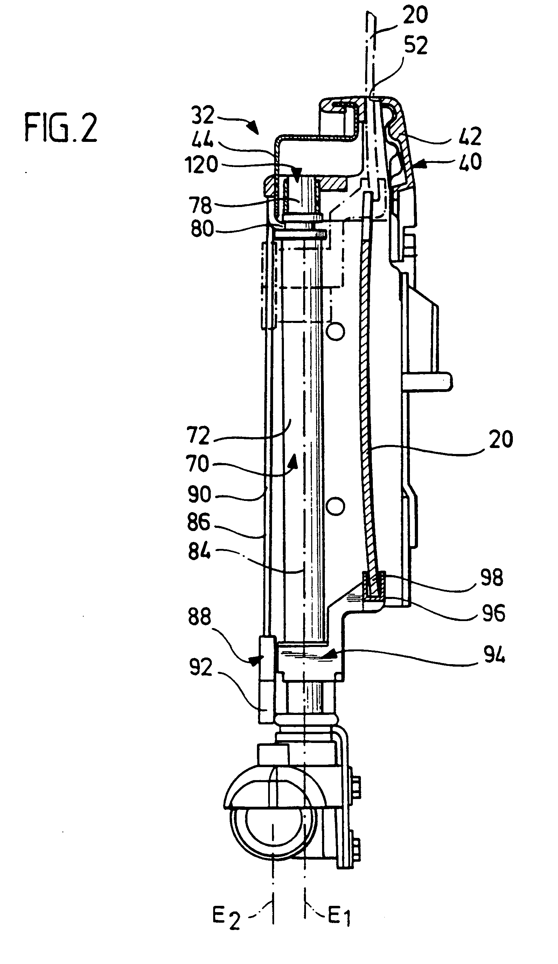

Wie in Fig. 2 bis 5 dargestellt, weist die Halterung 32 einen oberen Querträger 40 auf, umfassend ein vorderes Trägerblech 42 und ein hinteres Trägerblech 44, welche sich jeweils in einer quer zu einer Längsrichtung 46 der Karosserie 12 erstreckenden Querrichtung 48 erstrecken, und zwar im wesentlichen über die Breite der Karosserie 12. Der Querträger 40 liegt dabei nahe einer Oberseite 50 der Karosserie 12 in dem Aufnahmeraum 34. Vorzugsweise bildet der Querträger 40 eine obere Durchtrittsöffnung 52 für das Windstopelement 20, welche dieses nahe der Oberseite 50 der Karosserie 12 führt und vorzugsweise im Bereich einer in der Karosserie 12 vorgesehenen Austrittsöffnung 54 für das Windstopelement 20 liegt.

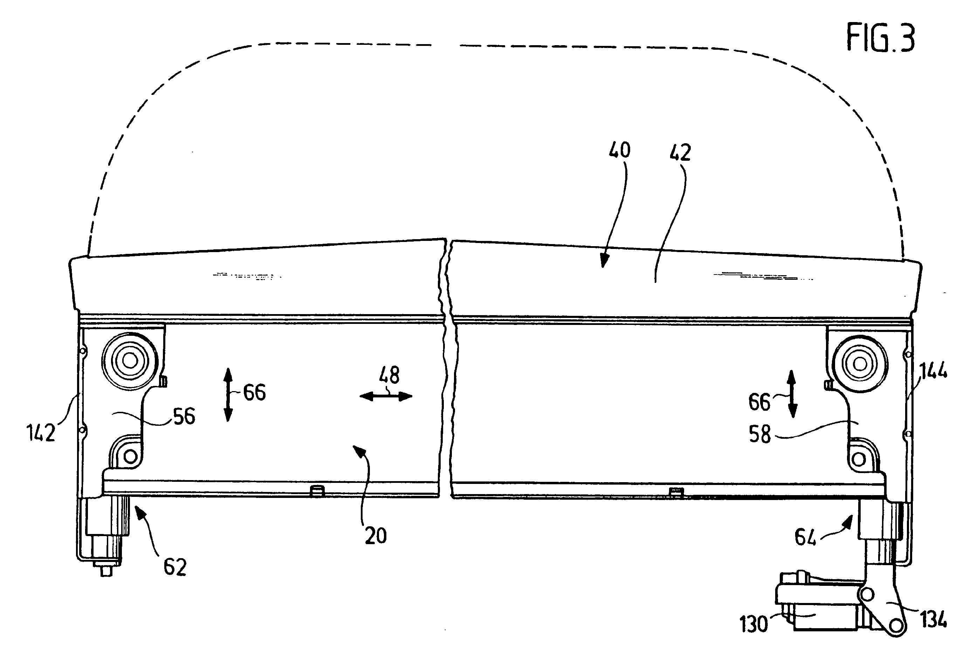

An dem Querträger 40 sind, wie in Fig. 3 dargestellt, in der Querrichtung 48 im Abstand voneinander angeordnete seitliche Träger 56 und 58 vorgesehen, welche sich ausgehend von dem Querträger 40 in den Aufnahmeraum 34 der Karosserie 12 hineinerstrecken, und zwar in Richtung einer Bodengruppe 60 derselben (Fig. 1).

An den seitlichen Trägern 56 und 58 ist jeweils eine Hebeeinheit 62, 64 vorgesehen, welche dazu dient, das Windstopelement 20 in einer Hubrichtung 66 zu bewegen, wobei die Hubrichtung 66 quer zur Gürtellinie 22 der Karosserie 12 und quer zur Bodengruppe 60 derselben, vorzugsweise in ungefähr senkrechter Richtung verläuft.

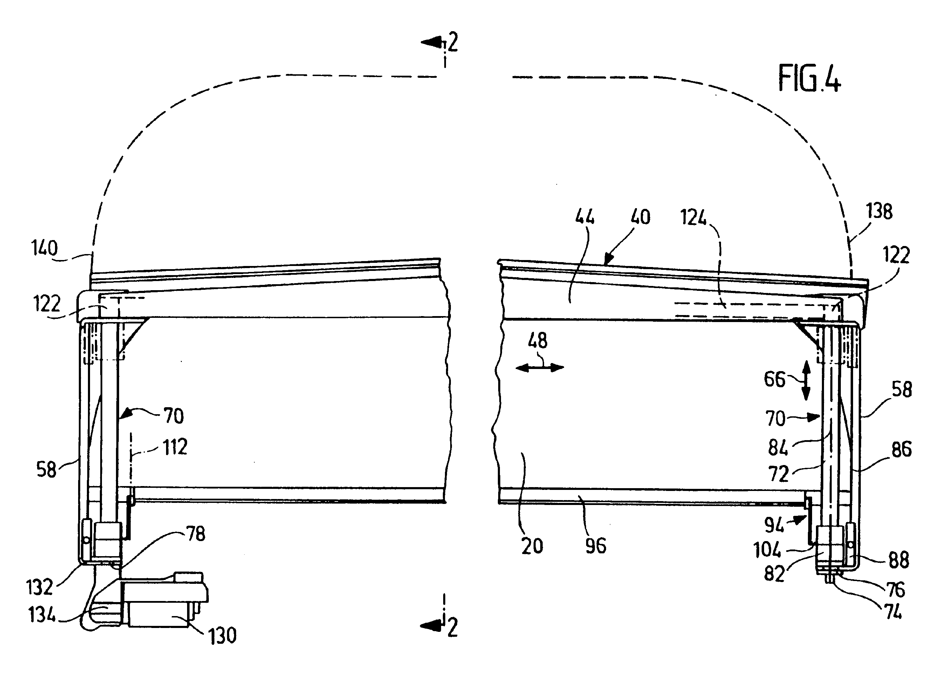

Jede der Hebeeinheiten 62, 64 umfaßt, wie in Fig. 2 und 4 dargestellt, ein Hubgetriebe 70, gebildet aus einer Hubspindel 72, welche im Bereich ihres unteren Endes 74 mit einem unteren Lager 76 und im Bereich ihres oberen Endes 78 mit einem oberen Lager 80 an dem jeweiligen seitlichen Träger 56 oder 58 sowohl axial als auch radial gelagert ist.

Auf der Hubspindel 72 ist eine Spindelmutter 82 angeordnet, welche durch Drehen der Hubspindel 72 in der Hubrichtung 66 parallel zu einer Achse 84 der jeweiligen Hubspindel 72 bewegbar ist.

Ferner ist jede der Hebeeinheiten 62 und 64 noch mit einer als Bahnführung ausgebildeten Hubführung 86 versehen, welche sich vorzugsweise parallel zur Achse 84 der Hubspindel 72 erstreckt und längs welcher ein Führungskörper 88 bewegbar ist. Die Hubführung 86 ist vorzugsweise als durch eine am jeweiligen seitlichen Träger 56, 58 angeordnete Leiste 90 gebildet, welche bei Ausführung des seitlichen Trägers 56, 58 als Blechteil durch eine geformte Blechkante gebildet ist. Diese Leiste wird auf beiden einander gegenüberliegenden Oberflächen von einem U-förmigen, als Führungskörper 88 ausgebildeten Formteil 92 umfasst.

Der Führungskörper 88 ist seinerseits an einem Hubführungshalter 94 angeordnet, welcher mit der Spindelmutter 82 verbunden ist und außerdem fest mit einer unteren Führungsleiste 96 verbunden ist, welche an dem Windstopelement 20 angeordnet ist und sich vorzugsweise in der Querrichtung 48 zwischen den beiden den jeweiligen Hebeeinheiten 62, 64 zugeordneten Hubführungshaltern 94 erstreckt.

Beispielsweise ist dabei die Hubführungsleiste 96 so ausgebildet, daß sie eine Unterkante 98 des Windstopelements 20 U-förmig aufnimmt.

Um einen leichten Lauf der Spindelmutter 82 und eine geometrische Überbestimmung des an der Hubführung 86 über den Führungskörper 88 geführten Hubführungshalters 94 gegenüber der Spindelmutter 82 zu verhindern, ist vorzugsweise vorgesehen, daß die Verbindung zwischen dem Hubführungshalter 94 und der Spindelmutter 82 über eine in eine Nut 100 in einer Seitenwand 102 der Spindelmutter 82 eingreifende Leiste 104 des Hubführungshalters 94 erfolgt, wobei die Nut 100 einen mittleren, die Leiste 104 exakt führenden Bereich 106 aufweist und äußere Bereiche 108 und 110, welche eine Kippbewegung der Leiste 104 des Hubführungshalters 94 zulassen, so daß dieser gegenüber der Spindelmutter 82 verkippbar ist, und zwar in einer Ebene 112, welche senkrecht zur Querrichtung 48 und parallel zu der Achse 84 der Hubspindel 72 verläuft.

Um die Bewegung der Spindelmuttern 82 in der Hubrichtung 66 zu synchronisieren, sind die beiden Hubeinheiten 62 und 64 über ein Verbindungsgetriebe 120 gekoppelt, welches ein im Bereich des oberen Endes 78 der jeweiligen Hubspindel 72 angeordnetes Zahnriemenrad 122 umfaßt und einen die beiden Zahnriemenräder verbindenden Zahnriemen 120, der innerhalb des Querträgers 40, vorzugsweise nahe des hinteren Trägerblechs 44, in der Querrichtung 48 verläuft und die beiden Zahnriemenräder 122 miteinander koppelt.

Ferner ist zum Antrieb der beiden Hubspindeln 72, gekoppelt über das Verbindungsgetriebe 120, ein elektrischer Antriebsmotor 130 vorgesehen, welcher an einem der seitlichen Träger 56, 58, beispielsweise am seitlichen Träger 58, vorzugsweise an einem unteren Ende 132 desselben gehalten ist und die diesem seitlichen Träger 58 zugeordnete Hubspindel 72 im Bereich ihres unteren Endes 78 antreibt.

Vorzugsweise ist der Antriebsmotor 130 mit einem Getriebe 134, vorzugsweise ausgeführt als Winkelgetriebe versehen, um die dem seitlichen Träger 58 zugeordnete Hubspindel 72 im Bereich ihres unteren Endes 78 anzutreiben.

Um die erfindungsgemäße Windstopeinrichtung 14 in Richtung der Querrichtung 58 möglichst schmalbauend ausbilden zu können, ist vorzugsweise vorgesehen, daß die Hubgetriebe 70 innerhalb von einer maximalen Erstreckung des Windstopelements 20 in der Querrichtung 58 definierenden äußeren Seitenkanten 138 und 140 liegt und vorzugsweise lediglich die seitlichen Träger 56 und 58 mit ihren äußeren Seitenteilen 142 und 144, welche die Hubführungen 86 tragen, in der Querrichtung 48 außerhalb der Seitenkanten 138 und 140 liegen.

Ferner liegen, wie in Fig. 2 dargestellt, die Hubspindeln 72 mit ihren Achsen 84 in einer sich ungefähr parallel, jedoch im Abstand zu dem Windstopelement 20 in der inaktiven Stellung verlaufenden Ebene E₁ und auch die Hubführungen 86 erstrecken sich in einer im Abstand zu dem Windstopelement 20 in der inaktiven Stellung und ungefähr parallel verlaufenden Ebene E₂ und liegen dabei in der Querrichtung 48 gesehen maximal ungefähr im Bereich der Seitenkanten 138, 140.

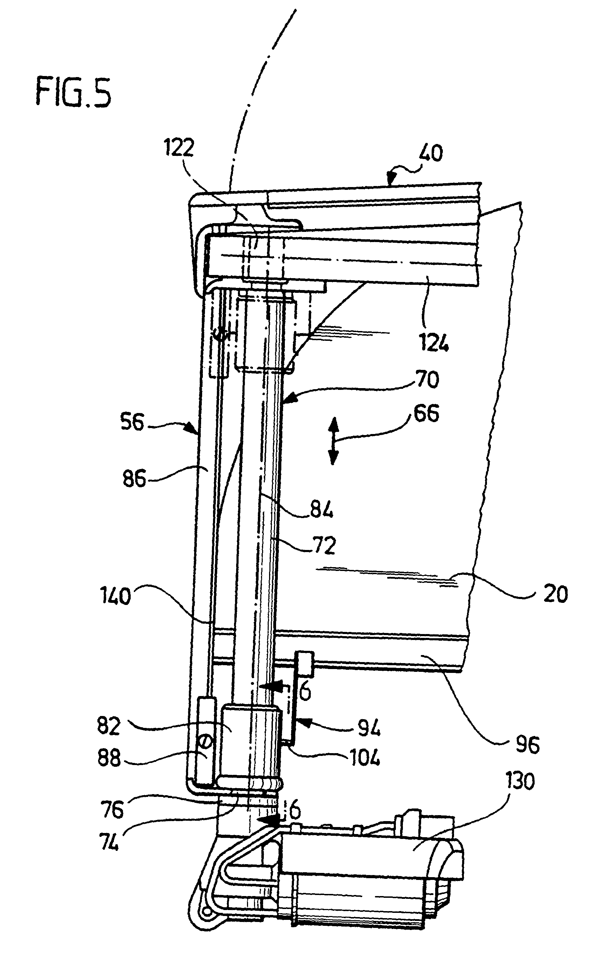

Wie in Fig. 2 und 5 dargestellt, ist somit durch synchrones Antreiben der beiden Hubspindeln 72 das Windstopelement 20 in der Hubrichtung 66 von seiner inaktiven Stellung im Aufnahmeraum 34 aus dem Aufnahmeraum 34 herausfahrbar, wobei sich die Hubführungshalter 94 von ihrer nahe dem unteren Ende 74 der Hubspindeln 72 stehenden Stellung in Richtung einer nahe dem oberen Ende 78 der Hubspindeln 72 stehenden Stellung bewegen und dabei durch Verschieben der unteren Führungsleiste 78 das Windstopelement 20 durch die Durchtrittsöffnung 52 in dem Querträger 40 hindurch von der inaktiven Stellung in die aktive Stellung bewegen und, wie in Fig. 3, 4 und 5 gestrichelt dargestellt, in der aktiven Stellung das Windstopelement 20 dadurch fixieren, daß dieses einerseits durch die Durchtrittsöffnung 52 relativ zum Querträger 40 und somit an der Halterung 32 fixiert ist und andererseits durch die in Hubrichtung 66 im Abstand von der Durchtrittsöffnung 52 stehende untere Führungsleiste 96, die ihrerseits über die Hubführungshalter 94 an den Hubführungen 86 der seitlichen Träger 56, 58 abgestützt ist.

Desgleichen wird auch in der inaktiven Stellung das Windstopelement 20 einerseits durch die Durchtrittsöffnung 52 geführt und andererseits durch die Hubführungshalter 94 und deren relative Führung über die Führungskörper 88 an den Hubführungen 86.

Das Windstopelement 20 ist bei dem ersten Ausführungsbeispiel vorzugsweise als plattenförmiges Teil aus einem formsteifen, vorzugsweise durchsichtigen, Material ausgebildet, welches in der unteren Führungsleiste 96, die die Unterkante 98 des Windstopelements 20 U-förmig umgreift, fixiert ist.

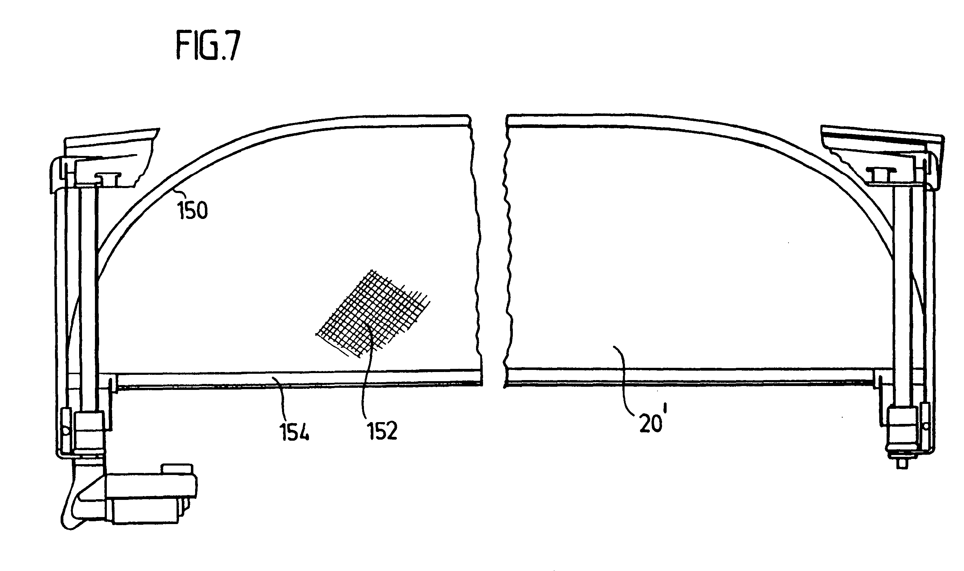

Es ist aber auch bei einem zweiten Ausführungsbeispiel, dargestellt in Fig. 7 denkbar, das Windstopelement 20' so auszubilden, daß dieses einen formsteifen Rahmen 150 umfaßt, in welchem eine zwar luftdurchlässige, aber für eine Windströmung undurchlässige oder wenig durchlässige Bespannung 152 aufgespannt ist, wobei vorzugsweise ein unterer Rahmenschenkel 154 des Rahmens 150 die untere Führungsleiste 96 ersetzt, so daß an diesem unteren Rahmenschenkel 154 unmittelbar die Hubführungshalter 94 gehalten sind.

## Patentansprüche

1. Windstopeinrichtung für Kraftfahrzeuge, umfassend ein Windstopelement,
eine in einen Aufnahmeraum (34) einer Kraftfahrzeugkarosserie (12) eingreifend montierbare Halterung (32) für das Windstopelement (20), an welcher dieses derart gelagert ist, dass es von einer aktiven, über eine Gürtellinie (22) der Kraftfahrzeugkarosserie (12) überstehenden Stellung in eine im Wesentlichen innerhalb einer Außenkontur der Kraftfahrzeugkarosserie (12) liegende inaktive Stellung bringbar ist und umgekehrt,
eine mit einem elektrischen Antrieb (130) versehenen Hebevorrichtung, mit welcher das Windstopelement (20) in einer Hubrichtung (66) zwischen der inaktiven Stellung und der aktiven Stellung verfahrbar ist,
**dadurch gekennzeichnet, dass** die Hebevorrichtung (62, 64) eine sich in der Hubrichtung (66) erstreckende und mit einem unteren Bereich des Windstopelements (20) gekoppelte und den unteren Bereich des Windstopelements (20) führende Bahnführung (86) aufweist, und dass das Windstopelement (20) in der aktiven Stellung mit einer nahe einer für dieses in der Karosserie (12) vorgesehenen Austrittsöffnung (54) angeordneten Austrittsführung (52) zusätzlich zu der Führung des unteren Bereichs durch die Bahnführung (86) geführt ist.

2. Windstopeinrichtung nach Anspruch 1, **dadurch gekennzeichnet, dass** die Hebevorrichtung zwei in einer Querrichtung (48) im Abstand voneinander angeordnete Hebeeinheiten (62, 64) aufweist.

3. Windstopeinrichtung nach einem der voranstehenden Ansprüche,
**dadurch gekennzeichnet, dass** die Halterung (32) zwei in der Querrichtung (48) im Abstand voneinander angeordnete und sich in einer Hubrichtung (66) erstreckenden Träger (56, 58) aufweist, an denen die Hebeeinheiten (62, 64) angeordnet sind.

4. Windstopeinrichtung nach einem der voranstehenden Ansprüche,
**dadurch gekennzeichnet, dass** das Windstopelement (20) in allen Stellungen mit der nahe der in der Karosserie (12) für dieses vorgesehenen Austrittsöffnung (54) angeordneten Austrittsführung (52) geführt ist.

5. Windstopeinrichtung nach Anspruch 4, **dadurch gekennzeichnet, dass** die Austrittsführung (52) an der Halterung (32) angeordnet ist.

6. Windstopeinrichtung nach einem der Ansprüche 2 bis 5, **dadurch gekennzeichnet, dass** die Hebeeinheiten (62, 64) derart miteinander gekoppelt sind, dass alle durch diese erreichbare Stellungen des Windstopelements (20) parallel zueinander ausgerichtet sind.

7. Windstopeinrichtung nach Anspruch 6, **dadurch gekennzeichnet, dass** die beiden Hebeeinheiten (62, 64) mechanisch miteinander synchronisiert bewegbar sind.

8. Windstopeinrichtung nach einem der Ansprüche 2 bis 7, **dadurch gekennzeichnet, dass** die Hebeeinheiten (62, 64) durch ein Verbindungsgetriebe (120) miteinander gekoppelt sind.

9. Windstopeinrichtung nach Anspruch 8, **dadurch gekennzeichnet, dass** das Verbindungsgetriebe (120) im Bereich eines Querträgers (40) der Halterung (32) angeordnet ist.

10. Windstopeinrichtung nach Anspruch 9, **dadurch gekennzeichnet, dass** das Verbindungsgetriebe (120) im Bereich eines oberen Querträgers (40) der Halterung (32) angeordnet ist.

11. Windstopeinrichtung nach einem der Ansprüche 2 bis 10, **dadurch gekennzeichnet, dass** die Hebeeinheiten (62, 64) durch einen einzigen elektrischen Antrieb (130) antreibbar sind.

12. Windstopeinrichtung nach einem der Ansprüche 2 bis 11, **dadurch gekennzeichnet, dass** jede der Hebeeinheiten (62, 64) ein Hubgetriebe (70) aufweist, welches auf das Windstopelement (20) wirkt.

13. Windstopeinrichtung nach Anspruch 12, **dadurch gekennzeichnet, dass** jedes Hubgetriebe (70) eine Hubspindel (72) mit einer Spindelmutter (82) aufweist.

14. Windstopeinrichtung nach einem der voranstehenden Ansprüche,
**dadurch gekennzeichnet, dass** die Bahnführung (86) neben dem Hubgetriebe (70) verläuft.

15. Windstopeinrichtung nach einem der voranstehenden Ansprüche,
**dadurch gekennzeichnet, dass** die Bahnführung (86) an den Trägern: (56, 58) angeordnet ist.

16. Windstopeinrichtung nach einem der Ansprüche 12 bis 15, **dadurch gekennzeichnet, dass** das Windstopelement (20) mit jedem der Hubgetriebe (70) über ein ein Kippen quer zur Hubrichtung (66) zulassendes Hublager (100, 104) gekoppelt ist.

17. Windstopeinrichtung nach einem der voranstehenden Ansprüche,
**dadurch gekennzeichnet, dass** sich die Hebevorrichtung (62, 64) in einer Hubrichtung (66) im wesentlichen über einen Bereich erstreckt über den sich das in seiner inaktiven Stellung stehende Windstopelement (20) erstreckt.

18. Windstopeinrichtung nach Anspruch 17, **dadurch gekennzeichnet, dass** sich die Hebeeinheiten (62, 64) in der Hubrichtung (66) im wesentlichen über den Bereich erstrecken, über den sich das in seiner inaktiven Stellung stehende Windstopelement (20) erstreckt.

19. Windstopeinrichtung nach einem der Ansprüche 12 bis 18, **dadurch gekennzeichnet, dass** die Hubgetriebe (70) in einer zum Windstopelement (20) in seiner inaktiven Stellung ungefähr parallelen Ebene liegen.

20. Windstopeinrichtung nach einem der voranstehenden Ansprüche,
**dadurch gekennzeichnet, dass** die Bahnführung (86) in einer zum Windstopelement (20) in seiner inaktiven Stellung ungefähr parallelen Ebene verläuft.

21. Windstopeinrichtung nach einem der voranstehenden Ansprüche,
**dadurch gekennzeichnet, dass** das Windstopelement (20) in allen Stellungen sich in der Querrichtung (48) und quer zur Gürtellinie (22) der Kraftfahrzeugkarosserie (12) erstreckt.

22. Windstopeinrichtung nach einem der voranstehenden Ansprüche,
**dadurch gekennzeichnet, dass** das Windstopelement (20) aus einem plattenähnlich geformten formsteifen Material ausgebildet ist.

23. Windstopeinrichtung nach einem der voranstehenden Ansprüche,
**dadurch gekennzeichnet, dass** das Windstopelement (20') einen formsteifen Rahmen (150) mit einer Bespannung (152) umfaßt.

24. Windstopeinrichtung nach einem der voranstehenden Ansprüche,
**dadurch gekennzeichnet, dass** das Windstopelement (20, 20') forminvariant zwischen der aktiven Stellung und der inaktiven Stellung bewegbar ist.

## Claims

1. Wind stop device for motor vehicles, comprising
a wind stop element,
a holder (32) for the wind stop element (20), which is mountable so as to engage a receiving space (34) of a motor vehicle body (12), the wind stop element being mounted on the holder in such a way that it can be brought from an active position projecting above a girth line (22) of the motor vehicle body (12) to an inactive position lying essentially within an outer contour of the motor vehicle body (12) and vice versa,
a lifting device provided with an electric drive (130), by means of which the wind stop element (20) is transferrable in a lifting direction (66) between the inactive position and the active position,
**characterized in that** the lifting device (62, 64) comprises a path guide (86) extending in the lifting direction (66), which is coupled with a lower region of the wind stop element (20) and guides the lower region of the wind stop element (20), and **in that** in the active position the wind stop element (20) is guided by means of an exit guide (52) arranged near an exit opening (54) provided for the wind stop element in the body (12) in addition to the guidance of the lower region by means of the path guide (86).

2. Wind stop device according to claim 1, **characterized in that** the lifting device comprises two lifting units (62, 64) arranged at a distance from one another in a transverse direction (48).

3. Wind stop device according to any one of the preceding claims,
**characterized in that** the holder (32) comprises two supports (56, 58) arranged at a distance from each other in the transverse direction (48) and extending in a lifting direction (66), on which the lifting units (62, 64) are arranged.

4. Wind stop device according to any one of the preceding claims,
**characterized in that** the wind stop element (20) is guided in all positions by means of the exit guide (52) arranged near the exit opening (54) provided for the wind stop element in the body (12).

5. Wind stop device according to claim 4, **characterized in that** the exit guide (52) is arranged on the holder (32).

6. Wind stop device according to any one of claims 2 to 5, **characterized in that** the lifting units (62, 64) are coupled with one another in such a way that all the positions of the wind stop element (20) attainable by means of these are aligned parallel to one another.

7. Wind stop device according to claim 6, **characterized in that** the two lifting units (62, 64) are movable in mechanical synchronization with one another.

8. Wind stop device according to any one of claims 2 to 7, **characterized in that** the lifting units (62, 64) are coupled with one another by means of a connecting transmission (120).

9. Wind stop device according to claim 8, **characterized in that** the connecting transmission (120) is arranged in the area of a crossbeam (40) of the holder (32).

10. Wind stop device according to claim 9, **characterized in that** the connecting transmission (120) is arranged in the area of an upper crossbeam (40) of the holder (32).

11. Wind stop device according to any one of claims 2 to 10, **characterized in that** the lifting units (62, 64) are drivable by a single electric drive (130).

12. Wind stop device according to any one of claims 2 to 11, **characterized in that** each of the lifting units (62, 64) comprises a lifting transmission (70) which acts on the wind stop element (20).

13. Wind stop device according to claim 12, **characterized in that** each lifting transmission (70) comprises a lifting spindle (72) with a spindle nut (82).

14. Wind stop device according to any one of the preceding claims,
**characterized in that** the path guide (86) runs alongside the lifting transmission (70).

15. Wind stop device according to any one of the preceding claims,
**characterized in that** the path guide (86) is arranged on the supports (56, 58).

16. Wind stop device according to any one of claims 12 to 15, **characterized in that** the wind stop element (20) is coupled with each of the lifting transmissions (70) by means of a lift bearing (100, 104) allowing a tilting transversely to the lifting direction (66).

17. Wind stop device according to any one of the preceding claims,
**characterized in that** the lifting device (62, 64) extends in a lifting direction (66) essentially over an area over which the wind stop element (20) extends in its inactive position.

18. Wind stop device according to claim 17, **characterized in that** the lifting units (62, 64) extend in the lifting direction (66) essentially over the area over which the wind stop element (20) extends in its inactive position.

19. Wind stop device according to any one of claims 12 to 18, **characterized in that** the lifting transmissions (70) lie in a plane which is approximately parallel to the wind stop element (20) in its inactive position.

20. Wind stop device according to any one of the preceding claims,
**characterized in that** the path guide (86) runs in a plane approximately parallel to the wind stop element (20) in its inactive position.

21. Wind stop device according to any one of the preceding claims,
**characterized in that** the wind stop element (20) extends in all positions in the transverse direction (48) and transversely to the girth line (22) of the motor vehicle body (12).

22. Wind stop device according to any one of the preceding claims,
**characterized in that** the wind stop element (20) is constructed from a rigid material shaped like a plate.

23. Wind stop device according to any one of the preceding claims,
**characterized in that** the wind stop element (20') comprises a rigid frame (150) with a covering (152).

24. Wind stop device according to any one of the preceding claims,
**characterized in that** the wind stop element (20, 20') is form-invariantly movable between the active position and the inactive position.

## Revendications

1. Déflecteur de vent pour véhicules, comprenant un élément déflecteur, une fixation prévue pour l'élément déflecteur de vent (20) (32) pouvant être montée par engagement dans un espace de réception (34) d'une carrosserie de véhicule (12), l'élément déflecteur étant logé sur cette fixation de telle sorte qu'il peut être amené d'une position active, dépassant d'une ligne de ceinture (22) de la carrosserie du véhicule (12) dans une position inactive, située sensiblement à l'intérieur d'un contour extérieur de la carrosserie du véhicule (12) et inversement,
un dispositif de levage comprenant un entraînement (130) électrique, grâce auquel l'élément déflecteur (20) peut être déplacé dans une direction de levage (66) entre la position inactive et la position active, **caractérisé en ce que** le dispositif de levage (62, 64) présente un guide de trajectoire (86), s'étendant dans la direction de levage (66), couplé à une zone inférieure de l'élément déflecteur (20) et guidant la zone inférieure de l'élément déflecteur (20), et **en ce que** l'élément déflecteur (20) est guidé dans la position active par un guide de sortie (52) disposé à proximité d'une ouverture de sortie (54) prévue pour cet élément dans la carrosserie (12) en plus du guidage de la zone inférieure par le guide de trajectoire (86).

2. Déflecteur de vent selon la revendication 1, **caractérisé en ce que** le dispositif de levage présente deux unités de levage (62, 64) disposées à distance l'une de l'autre dans une direction transversale (48).

3. Déflecteur de vent selon l'une quelconque des revendications précédentes, **caractérisé en ce que** la fixation (32) présente deux supports (56, 58) disposés dans la direction transversale (48) à distance l'un de l'autre et s'étendant dans la direction de levage (66), sur lesquels sont disposées les unités de levage (62, 64).

4. Déflecteur de vent selon l'une quelconque des revendications précédentes, **caractérisé en ce que** l'élément déflecteur de vent (20) est guidé dans toutes les positions par le guide de sortie (52) disposé à proximité de l'ouverture de sortie (54) prévue dans la carrosserie (12) pour cet élément.

5. Déflecteur de vent selon la revendication 4, **caractérisé en ce que** le guide de sortie (52) est disposé sur la fixation (32).

6. Déflecteur de vent selon l'une quelconque des revendications 2 à 5, **caractérisé en ce que** les unités de levage (62, 64) sont couplées entre elles de telle sorte que toutes les positions de l'élément déflecteur de vent (20) pouvant être obtenues par ces unités sont orientées parallèlement entre elles.

7. Déflecteur de vent selon la revendication 6, **caractérisé en ce que** les deux unités de levage (62, 64) peuvent être déplacées de façon mécanique et synchronisée l'une avec l'autre.

8. Déflecteur de vent selon l'une quelconque des revendications 2 à 7, **caractérisé en ce que** les unités de levage (62, 64) sont couplées entre elles par un engrenage de liaison (120).

9. Déflecteur de vent selon la revendication 8, **caractérisé en ce que** l'engrenage de liaison (120) est disposé au niveau d'une traverse (40) de la fixation (32).

10. Déflecteur de vent selon la revendication 9, **caractérisé en ce que** l'engrenage de liaison (120) est disposé au niveau d'une traverse (40) supérieure de la fixation (32).

11. Déflecteur de vent selon l'une quelconque des revendications 2 à 10, **caractérisé en ce que** les unités de levage (62, 64) peuvent être entraînées par un unique entraînement (130) électrique.

12. Déflecteur de vent selon l'une quelconque des revendications 2 à 11, **caractérisé en ce que** chacune des unités de levage (62, 64) présente un engrenage de levage (70) qui agit sur l'élément déflecteur e vent (20).

13. Déflecteur de vent selon la revendication 12, **caractérisé en ce que** chaque engrenage de levage (70) présente une broche de levage (72) avec un écrou broche (82).

14. Déflecteur de vent selon l'une quelconque des revendications précédentes, **caractérisé en ce que** le guide de trajectoire (86) est agencé à côté de l'engrenage de levage (70).

15. Déflecteur de vent selon l'une quelconque des revendications précédentes, **caractérisé en ce que** le guide de trajectoire (86) est disposé sur les supports (56, 58).

16. Déflecteur de vent selon l'une quelconque des revendications 12 à 15, **caractérisé en ce que** l'élément déflecteur de vent (20) est couplé avec chacun des engrenages de levage (70) au moyen d'un palier de levage (100, 104) autorisant un basculement dans une direction transversale au sens de levage (66).

17. Déflecteur de vent selon l'une quelconque des revendications précédentes, **caractérisé en ce que** le dispositif de levage (62, 64) s'étend dans une direction de levage (66) sur une zone sur laquelle l'élément déflecteur de vent (20) s'étend sensiblement lorsqu'il se trouve en position inactive.

18. Déflecteur de vent selon la revendication 17, **caractérisé en ce que** les unités de levage (62, 64) s'étendent dans la direction de levage (66) sur la zone sur laquelle l'élément déflecteur (20) s'étend sensiblement lorsqu'il se trouve en position inactive.

19. Déflecteur de vent selon l'une quelconque des revendications 12 à 18, **caractérisé en ce que** les engrenages de levage (70) sont situés dans un plan à peu près parallèle à l'élément déflecteur de vent (20) dans sa position inactive.

20. Déflecteur de vent selon l'une quelconque des revendications précédentes, **caractérisé en ce que** le guide de bande (86) est agencé dans un plan à peu près parallèle à l'élément déflecteur de vent (20) dans sa position inactive.

21. Déflecteur de vent selon l'une quelconque des revendications précédentes, **caractérisé en ce que** l'élément déflecteur de vent (20) s'étend dans toutes les positions dans la direction transversale (48) et transversalement à la ligne de ceinture (22) de la carrosserie du véhicule (12).

22. Déflecteur de vent selon l'une quelconque des revendications précédentes, **caractérisé en ce que** l'élément déflecteur de vent (20) est réalisé dans un matériau indéformable et formé à la façon d'une plaque.

23. Déflecteur de vent selon l'une quelconque des revendications précédentes, **caractérisé en ce que** l'élément déflecteur (20') comprend un cadre (150) indéformable avec un dispositif de tension (152).

24. Déflecteur de vent selon l'une quelconque des revendications précédentes, **caractérisé en ce que** l'élément déflecteur (20, 20') peut être déplacé sans changer de forme entre la position active et la position inactive.
